# EUROPÄISCHE PATENTANMELDUNG

(11) **EP 3 028 963 A1**
(43) Veröffentlichungstag der Anmeldung: **08.06.2016**
(21) Anmeldenummer: 15201490.8
(22) Anmeldetag: 27.09.2007
(51) Int. Cl.: B65G 47/244, B65G 47/256, B65G 47/14, G01N 35/00

(54) **VORRICHTUNG ZUM ORIENTIEREN EINES BEHÄLTNISSES**

(30) Priorität: 02.10.2006 DE 202006015118 U
(62) Teilanmeldung aus: 07820657.0
(71) Anmelder: ASS Elektronik GmbH, 67269 Grünstadt (DE)
(72) Erfinder: Seidenspinner, Gunter, 67167 Erpholzheim (DE)
(74) Vertreter: Sommer, Peter

(57) **Zusammenfassung**

Die Erfindung betrifft eine Vorrichtung zum Orientieren eines Behältnisses (4) mit einer offenen Seite (41) und einer in Bezug auf eine Mittelachse (43) des Behältnisses (4) gegenüberliegenden geschlossenen Seite (42), insbesondere eines Reagenzglases. Die Vorrichtung weist eine Zuführeinrichtung (1) mit einer Förderrichtung (11) für das Behältnis (4) und einer in Förderrichtung (11) hinter der Zuführeinrichtung (1) angeordneten Orientierungseinrichtung (3) für das Behältnis (4) auf, aus der das Behältnis (4) mit einer vorbestimmten Seite (41, 42) im Wesentlichen mit der Mittelachse (43) parallel zur Förderrichtung (11) austritt. Vor der Orientierungseinrichtung (3) ist eine Justiereinrichtung (2) für das Justieren des Behältnisses (4) in einer Richtung rechtwinklig zur Förderrichtung (11) vorgesehen. Die Justiereinrichtung (2) weist mindestens einen im Wesentlichen rechtwinklig zur Förderrichtung (11) beweglichen Stößel (27) auf, dessen Durchmesser (22) kleiner als der Innendurchmesser (44) des Behältnisses (4) ist.

## Beschreibung

Die Erfindung betrifft eine Vorrichtung zum Orientieren eines Behältnisses mit einer offenen Seite und einer in Bezug auf eine Mittelachse des Behältnisses gegenüberliegenden geschlossenen Seite. Insbesondere Reagenzgläser, die ungeordnet gelagert sind, lassen sich mit dieser Vorrichtung ausrichten und somit in einen Träger einsortieren. Die Vorrichtung weist eine Zuführeinrichtung mit einer Förderrichtung für das Behältnis und einer in Förderrichtung hinter der Zuführeinrichtung angeordneten Orientierungseinrichtung für das Behältnis auf, aus der das Behältnis mit einer vorbestimmten Seite, also sortiert, im Wesentlichen mit der Mittelachse parallel zur Förderrichtung austritt.

Es sind verschiedenste Sortiervorrichtungen für Behälter mit einer offenen und einer geschlossenen Seite im Stand der Technik bekannt.

Als nächstliegender Stand der Technik kommt die
DE 29 48 897 A1 in Betracht. Hier ist eine Flaschenorientierungseinrichtung beschrieben, bei der die Flaschen über einen von zwei bewegbaren Bolzen, der durch die Bewegung der Flasche am Flaschenhals anschlägt, orientiert oder ausgerichtet werden. Alle Flaschen werden hierzu in Bezug auf ihre Längsachse in einer Position quer zur Förderrichtung zugeführt und werden entweder durch den einen Bolzen auf der einen Seite oder durch den gegenüberliegenden Bolzen auf der anderen Seite des Transportbandes mit ihrer Längsachse parallel zur Förderrichtung ausgerichtet. Hierzu wird die Lage der jeweiligen Flasche durch eine Abfühlvorrichtung elektronisch erkannt, bevor die Flasche an die Flaschenorientierungsstation gelangt. In Abhängigkeit von der Lageerkennung wird der jeweilige Bolzen über einen Antrieb einer Torvorrichtung in Förderrichtung vor den Flaschenhals bewegt.

In der US 4,483,435 ist eine Vorrichtung beschrieben, bei der die Flasche mit ihrer Öffnung in einen Greifhaken transportiert wird und dadurch in einer Richtung quer zur Förderrichtung der Flasche aufgestellt wird. Ähnliche Techniken, bei denen die Flasche in oder an ihrer Öffnung festgehalten und aufgrund der Förderbewegung aufgerichtet wird, sind aus der DE 24 14 537 A, US 3,726,387 und US 3,894,628 sowie DE 26 21 387 bekannt.

Die Aufgabe der Erfindung besteht darin, eine Vorrichtung zum Orientieren eines Behältnisses derart auszubilden und anzuordnen, dass eine einfache und fehlerfreie Orientierung ohne eine Lageerkennungseinrichtung möglich ist.

### Darstellung der Erfindung

Gemäß der Erfindung kann vor der Orientierungseinrichtung eine Justiereinrichtung zum Justieren des Behältnisses in einer Richtung rechtwinklig zur Förderrichtung vorgesehen sein. Die Justiereinrichtung kann mindestens einen im Wesentlichen rechtwinklig zur Förderrichtung beweglichen Stößel aufweisen, dessen Durchmesser kleiner als der Innendurchmesser des Behältnisses ist. Durch den Stößel kann das Behältnis in Abhängigkeit von der Ausrichtung der offenen Seite in rechtwinkliger Richtung zur Förderrichtung in eine definierte Position B justiert werden, sodass eine darauf folgende, einfache, mechanische Orientierung des Behältnisses möglich wird, ohne die Lage des Behältnisses zu überprüfen und ohne das Werkzeug zum Drehen des Behältnisses für die Orientierung mechanisch antreiben zu müssen.

Vorteilhaft ist es hierzu, dass die Justiereinrichtung in Förderrichtung vor dem Stößel eine in Förderrichtung orientierte Gleitschiene aufweisen kann, an der das Behältnis während der Förderung durch die Zuführeinrichtung entlanggleitet, und die Zuführeinrichtung eine zumindest der Länge des Behältnisses entsprechende Förderbreite aufweist. Dabei kann durch die Gleitschiene die Förderbreite der Zuführeinrichtung für das Behältnis in Förderrichtung kontinuierlich reduziert werden. Hierdurch wird erreicht, dass das Behältnis nach der Zuführung zunächst unabhängig von der Ausrichtung der offenen Seite in Bezug zu einer Richtung rechtwinklig zur Förderrichtung in eine definierte Position A justiert wird. Das Behältnis, dessen offene Seite in dieser Position A schon zufällig richtig ausgerichtet ist, weil die offene Seite dem Stößel zugewandt ist, wird durch den Stößel, der in das Behältnis eintaucht, nicht beeinflusst und das Behältnis wird nicht in die Position B justiert. Das Behältnis, dessen offene Seite in der Position A nicht richtig ausgerichtet ist, wird durch den Stößel auf die Position B justiert, der das Behältnis an der geschlossenen Seite in Richtung der Mittelachse verschiebt. Justieren bedeutet im Sinne der Erfindung keine Änderung der Orientierung des Behältnisses, sondern eine definierte Lageänderung bei gleichbleibender Orientierung.

Alternativ zu der Gleitschiene ist es vorteilhaft, dass die Justiereinrichtung in Bezug zur Förderrichtung gegenüber dem Stößel einen zweiten Stößel aufweisen kann und die beiden Stößel koaxial zueinander angeordnet sein können. Für den Fall, dass eine Justierung in die Position A nicht schon in der Zuführeinrichtung erfolgte, wird das Behältnis je nach Ausrichtung seiner geschlossenen Seite durch einen der beiden Stößel in die Position A oder in die Position B verschoben. Der jeweils andere Stößel taucht ohne Wirkung auf die Lage des Behältnisses in die offene Seite ein. Wesentlich ist bei dieser Vorrichtung, dass das Behältnis während der Justierung durch den Stößel nicht in Förderrichtung bewegt wird. Wenn das Behältnis weiter gefördert wird, kann durch die definierte Lage in der Position A oder B die für die Orientierung des Behältnisses in der Förderrichtung notwendige mechanische Führung starr ausgebildet sein.

Bei der Bewegung des Behältnisses durch den Stößel kommt es darauf an, dass das Behältnis im Wesentlichen rechtwinklig zur Förderrichtung justiert wird. Dazu muss der Stößel nicht zwingend rechtwinklig und geradlinig bewegt werden, er könnte auch in Umfangsrichtung um eine parallel zur Förderrichtung positionierte Achse drehen, sodass die Wirkung, nämlich das Behältnis in rechtwinkliger Richtung zur Förderrichtung zu justieren, gleich bleibt.

Zudem ist es von Vorteil, dass die Zuführeinrichtung ein Transportelement für das Behältnis aufweisen kann und durch das Transportelement das Behältnis mit der Mittelachse im Wesentlichen rechtwinklig zur Förderrichtung in Förderrichtung bis zur Justiereinrichtung transportierbar sein kann. Dadurch wird eine Justierung des Behältnisses möglich, ohne dass ein zusätzlicher Schritt notwendig wäre, mit dem das Behältnis in die für die Justierung notwendige Lage gebracht würde.

Daneben ist es vorteilhaft, dass die Justiereinrichtung eine Aufnahme mit einer Parkfläche für das Behältnis aufweisen kann, auf der das Behältnis mit seiner Mittelachse im Wesentlichen rechtwinklig zu der Förderrichtung positionierbar ist. Durch die Parkfläche kann das Behältnis in Förderrichtung gestoppt werden, damit der Stößel ohne weiteren technischen Aufwand eingesetzt werden kann. Eine dynamische Justierung, ohne das Behältnis auf der Parkfläche zu stoppen, ist möglich, erfordert jedoch einen erheblichen technischen Aufwand.

In Bezug auf die Justierung ist es vorteilhaft, dass der Stößel derart angeordnet ist, dass der Stößel entlang der Mittelachse des auf der Parkfläche positionierbaren Behältnisses bewegbar sein kann.

Vorteilhafterweise kann die an die Aufnahme anschließende Orientierungseinrichtung eine das Behältnis in Förderrichtung weiter transportierende Rampe mit einer Förderfläche für das Behältnis aufweisen. Die Förderfläche kann dabei eine Breite BF aufweisen, die um einen Faktor 1,1 bis 1,8, insbesondere 1,2, größer ist als die Länge des Behältnisses zwischen der offenen Seite und der geschlossenen Seite. Dadurch wird erreicht, dass das Behältnis sowohl in der Position A als auch in der in Richtung der Mittelachse versetzt angeordneten Position B über die Förderfläche gefördert werden kann.

Vorteilhafterweise kann die Orientierungseinrichtung mindestens eine im Bereich der Förderfläche angeordnete mechanische Führung aufweisen, an der das Behältnis in Richtung der Mittelachse mit Bezug zu der Länge außermittig abgebremst werden kann. Durch dieses ebenfalls erfindungswesentliche Merkmal wird erreicht, dass das Behältnis an der offenen Seite in Förderrichtung abgebremst wird und so die geschlossene Seite voran weiter gefördert wird, wodurch die richtige Orientierung gewährleistet ist.

Vorteilhafterweise kann die Orientierungseinrichtung zwei im Bereich der Förderfläche und in Bezug auf die Rampe gegenüberliegend angeordnete mechanische Führungen aufweisen, an denen das Behältnis in Richtung der Mittelachse mit Bezug zu der Länge außermittig abgebremst werden kann.

Vorteilhafterweise weist die mechanische Führung eine als Rinne ausgebildete konkave Form auf, wobei die Rinne in einer Ebene der Förderfläche an die Förderfläche anschließt und ein gegenüber der Förderfläche geringeres Gefälle und/oder eine Steigung in Förderrichtung aufweist. Durch die Steigung wird das Behältnis, bevor es weiter transportiert wird, zunächst in seiner Rotation um seine Mittelachse gebremst, da das Behältnis mit der offenen Seite auf der Rinne nach oben rollt. Würde das Behältnis nur an der mechanischen Führung anschlagen, wäre der Bremseffekt erheblich kleiner.

Vorteilhafterweise kann an die Orientierungseinrichtung in Förderrichtung nach der Rampe eine Rutsche mit einer zumindest teilweise konkaven Rutschfläche für das Behältnis anschließen. Dadurch wird erreicht, dass das Behältnis mit der geschlossenen Seite voran in einen Träger oder sonstiges Behältnis gefördert werden kann. Die konkave Fläche bewirkt, dass sich das Behältnis während des Rutschvorgangs nicht drehen und wieder umorientieren kann. Dadurch, dass das Behältnis in seiner Rotation gebremst wurde, bevor es die Rutsche hinunter rutscht, fängt das Behältnis während des Rutschvorgangs nicht an zu trudeln.

Vorteilhafterweise kann die Rutsche zumindest teilweise im Bereich der Förderfläche in Förderrichtung vor oder an der mechanischen Führung an die Rampe anschließen.

Vorteilhafterweise kann die Förderung des Behältnisses in der Justiereinrichtung und in der Orientierungseinrichtung zumindest teilweise durch Schwerkraft erfolgen.

Vorteilhafterweise kann das Gefälle der Rutschfläche mindestens um einen Faktor 5 größer sein als das Gefälle der Förderfläche.

Vorteilhafterweise kann die Justiereinrichtung in Förderrichtung nach der Parkfläche eine Bremsvorrichtung für das Behältnis aufweisen und das Behältnis kann durch die Bremsvorrichtung auf der Parkfläche gestoppt werden. Die Bremsvorrichtung kann durch die Form zumindest eines Teils der Parkfläche selbst oder durch ein separates Element gebildet sein. Wesentlich ist, dass das Behältnis, nachdem es durch das Transportelement auf die Justiereinrichtung gefördert wurde, auf der Parkfläche gestoppt wird, damit es justiert werden kann.

Vorteilhafterweise kann als Bremsvorrichtung eine in Förderrichtung nach der Parkfläche angeordnete Barriere vorgesehen sein. Die Barriere hindert das Behältnis am Weiterrollen, sodass das Behältnis auf der Parkfläche gestoppt wird.

Vorteilhafterweise kann die Barriere in einer Richtung rechtwinklig zur Parkfläche zwischen einer das Behältnis bremsenden und einer das Behältnis in Förderrichtung freigebenden Position gehoben und gesenkt werden. Dadurch kann das Behältnis einfach durch Anheben des Behältnisses gebremst und durch Absenken des Behältnisses freigegeben werden.

Vorteilhafterweise kann die Rampe eine Ausnehmung aufweisen, in der die Barriere im Wesentlichen rechtwinklig zur Parkfläche geführt ist. Die Barriere und deren Antriebsvorrichtung können somit unterhalb der Förderfläche angeordnet werden, da die Barriere von unten eingreift.

Vorteilhafterweise kann mit Bezug zu der Aufnahme auf der gegenüberliegenden Seite des Stößels ein Pufferelement vorgesehen sein, mittels dessen das Behältnis gebremst werden kann. Das Behältnis stößt mit der offenen Seite an das Pufferelement an, wenn es auf der geschlossenen Seite durch den Stößel in die Position B justiert wird.

Das Verfahren zum Ausrichten des Behältnisses mit einer offenen Seite und einer in Bezug auf eine Mittelachse des Behältnisses gegenüberliegenden geschlossenen Seite ist durch folgende Verfahrensschritte vorteilhaft.

Zunächst wird das Behältnis über die Zuführeinrichtung in der Förderrichtung der Zuführeinrichtung mit seiner Mittelachse im Wesentlichen rechtwinklig zur Förderrichtung zu der Justiereinrichtung transportiert und dabei in Richtung der Mittelachse in eine definierte Position A ausgerichtet. Diese Position A ist eine in Bezug auf eine Seite des Behältnisses feste Position relativ zur Justiereinrichtung.

Danach wird das Behältnis weiterhin mit seiner Mittelachse rechtwinklig zu der Förderrichtung von der Zuführeinrichtung auf die Parkfläche der Justiereinrichtung gefördert, sodass das Behältnis in Bezug zu einer Richtung wiederum rechtwinklig zur Förderrichtung an der vorbestimmten Position A positioniert ist. Beginnend mit der Parkfläche wird das Behältnis bevorzugt durch die Schwerkraft über Flächen mit einer Neigung gefördert.

Durch die bewegbare Barriere der Bremsvorrichtung der Justiereinrichtung wird das Behältnis in Förderrichtung gestoppt.

Der Stößel der Justiereinrichtung wird koaxial zur Mittelachse des Behältnisses ausgefahren, was je nachdem, ob die offene Seite oder die geschlossene Seite des Behältnisses dem Stößel zugewandt ist, zur Folge hat, dass entweder der Stößel in die offene Seite des Behältnisses eindringt und das Behältnis in Richtung seiner Mittelachse beziehungsweise in rechtwinkliger Richtung zur Förderrichtung nicht aus der Position A verschoben wird oder der Stößel das Behältnis an der geschlossenen Seite in Richtung seiner Mittelachse beziehungsweise in rechtwinkliger Richtung zur Förderrichtung auf der Parkfläche auf eine Position B verschiebt.

Danach wird das Behältnis durch Absenken der Barriere in Förderrichtung freigegeben und rollt durch die Neigung der Parkfläche auf die ebenfalls geneigte Rampe der Orientierungseinrichtung.

Das Behältnis wird ausgehend von der Position A oder B in Förderrichtung auf der Rampe an zwei beidseitig der Rampe angeordneten mechanischen Führungen vorbei transportiert, sodass das Behältnis im Bereich der offenen Seite außermittig an einer der beiden mechanischen Führungen anschlägt und außermittig abgebremst und in Bezug zur Förderrichtung gedreht und somit orientiert wird.

Die mechanische Führung hat die Funktion eines Anschlages, jedoch wird das Behältnis nicht abrupt gestoppt, da die mechanische Führung eine Rinne in Form einer Rampe aufweist, auf die die offene Seite des Behältnisses hinauf läuft, sodass die Rotation des Behältnisses gestoppt wird.

Durch das Abbremsen des Behältnisses mit der offenen Seite an der mechanischen Führung wird das Behältnis mit der geschlossenen Seite in Förderrichtung in Bezug zu der offenen Seite weiter nach vorne gerichtet auf eine Rutsche gefördert und fällt mit der geschlossenen Seite in einen Träger.

### Kurze Beschreibung der Zeichnung

In den Zeichnungen sind Ausführungsbeispiele der Erfindung dargestellt. Es zeigt die:
- Fig. 1: eine schematische Seitenansicht einer Vorrichtung zum Orientieren von Behältnissen mit einer Zuführeinrichtung, einer Justiereinrichtung und einer Orientierungseinrichtung;
- Fig. 2: eine schematische Ansicht gemäß Fig. 1 von oben;
- Fig. 3a: eine schematische Ansicht eines Behältnisses in einer Position A von oben, falsch orientiert;
- Fig. 3b: eine Darstellung eines Behältnisses gemäß Fig. 3a, richtig orientiert;
- Fig. 3c: eine schematische Ansicht einer Austrittseinrichtung von oben mit einem Behältnis an der mechanischen Führung;
- Fig. 4: eine schematische Schnittansicht eines Behältnisses;
- Fig. 5: eine schematische Ansicht der Zuführeinrichtung;
- Fig. 6a: Verfahrensschritt vor der Justierung auf der Parkfläche;
- Fig. 6b: Verfahrensschritt nach der Justierung auf der Parkfläche;
- Fig. 6c: Verfahrensschritt unmittelbar vor der Orientierung auf der Rampe;
- Fig. 6d: Verfahrensschritt nach der Orientierung auf der Rutsche.

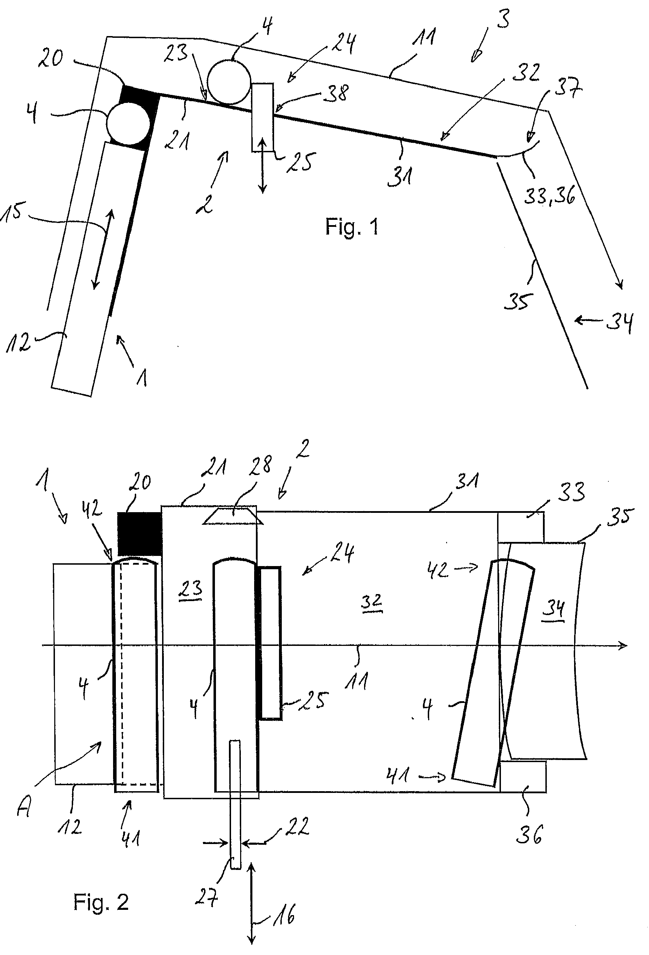

In Fig. 1 ist eine schematische Seitenansicht einer Vorrichtung zum Orientieren von Behältnissen 4 dargestellt, die eine Zuführeinrichtung 1, eine Justiereinrichtung 2 und eine Orientierungseinrichtung 3 aufweist. Durch diese Vorrichtung wird das Behältnis 4 in einer Förderrichtung 11 von der Zuführeinrichtung 1 über die Justiereinrichtung 2 bis hin zur Orientierungseinrichtung 3 transportiert und dabei letztendlich mit seiner offenen Seite 41 nach oben orientiert. Zu Beginn des Transports hat das Behältnis 4 eine in Bezug auf die Ausrichtung der offenen Seite 41 unbestimmte Orientierung.

Durch ein Transportelement 12 wird das Behältnis 4 aus einem nicht dargestellten Sammelbehälter entgegen der Schwerkraft nach oben zur Justiereinrichtung 2 gefördert und gleichzeitig mit seiner Mittelachse 43 rechtwinklig zur Förderrichtung 11 ausgerichtet. Diese Ausrichtung ist in dem Ausführungsbeispiel gemäß Fig. 1 bis 5 für die spätere Justierung notwendig. Das Transportelement 12 bewegt sich abwechselnd in die durch einen Pfeil 15 dargestellten Richtungen und vereinzelt dadurch die im Sammelbehälter gelagerten Behältnisse 4.

Während der Transportbewegung des Transportelements 12 in der Zuführeinrichtung 1 wird das Behältnis 4 unabhängig von der Ausrichtung der offenen Seite 41 durch eine Gleitschiene 20 in einer Richtung quer zur Förderrichtung 11 und in Richtung seiner Mittelachse 43 justiert.

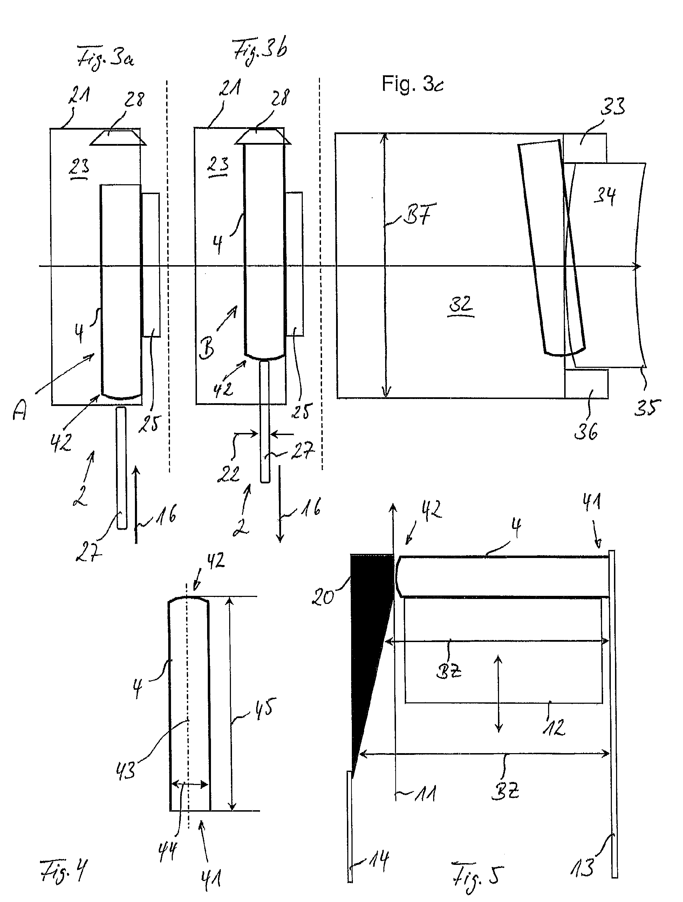

Hierzu gleitet, wie in Fig. 5 näher dargestellt ist, das Behältnis 4 auf dem Weg nach oben mit einer Seite, in diesem Beispiel gemäß Fig. 5 mit einer geschlossenen Seite 42, an der Gleitschiene 20 entlang. Zu Beginn des Fördervorgangs ist eine Förderbreite BZ von Seitenführungen 13, 14 der Zuführeinrichtung 1 größer als eine Länge 45 des Behältnisses 4 zwischen der offenen Seite 41 und der geschlossenen Seite 42. Die Förderbreite BZ wird durch die Gleitschiene 20 in Förderrichtung 11 hin weiter verkleinert, bis die Förderbreite BZ fast das Maß der Länge 45 des Behältnisses 4 erreicht und das Behältnis 4 an der Seitenführung 13 fast anschlägt. Dadurch wird unabhängig von der Ausrichtung der offenen Seite 41 des Behältnisses 4 eine in Richtung der Mittelachse 43 definierte Position A erreicht.

Dadurch dass das Behältnis 4 in Richtung seiner Mittelachse 43 in die definierte Position A justiert wird, kommt das Behältnis 4 wie in Fig. 1 und 2 dargestellt in dieser Position A an der Justiereinrichtung 2 an.

Die Justiereinrichtung 2 weist eine Aufnahme 21 auf, auf der das Behältnis 4 auf eine Parkfläche 23 der Aufnahme 21 rollt, um je nach Ausrichtung der offenen Seite 41 noch einmal justiert zu werden. Hierzu wird das Behältnis 4 in Förderrichtung 11 am Ende der Parkfläche 23 durch eine als Barriere 25 ausgebildete Bremsvorrichtung 24 gebremst und bleibt auf der Parkfläche 23 liegen. Die Barriere 25 ist in der durch einen Pfeil dargestellten Richtung rechtwinklig zu der Parkfläche 23 verstellbar und befindet sich gemäß Fig. 1 in einer oberen Position. In einer an die Parkfläche 23 angrenzenden Förderfläche 32 ist eine Ausnehmung 38 vorgesehen, in der die Barriere 25 gelagert und versenkbar ist.

In dieser Parkposition wird das Behältnis 4 ausgehend von seiner Position A in Abhängigkeit von der Ausrichtung der offenen Seite 41 in Bezug zur Förderrichtung 11 durch einen Stößel 27 nach rechts oder links justiert. In dem Beispiel gemäß Fig. 2 ist die offene Seite 41 des Behältnisses 4 zum Stößel 27 hin nach rechts gerichtet. Nach dem Erreichen der Parkposition durch das Behältnis 4 wird dies durch einen nicht dargestellten Sensor erkannt und der Stößel 27 aktiviert. Der Stößel 27 bewegt sich koaxial zur Mittelachse 43 des Behältnisses 4 um ein definiertes Maß in Richtung eines Pfeils 16 auf das Behältnis 4 zu. Der Stößel 27, dessen Durchmesser 22 kleiner als ein Innendurchmesser 44 des Behältnisses 4 ist, taucht in das Behältnis 4 ein, ohne die Position des Behältnisses 4 zu verändern, und nimmt anschließend wieder im alternierenden Rhythmus seine Ausgangsposition gemäß Fig. 3a ein. Das Behältnis 4 verharrt in diesem Fall in der Position A.

In dem Fall gemäß Fig. 3a und 3b ist das Behältnis 4 mit seiner geschlossenen Seite 42 in Richtung des Stößels 27 ausgerichtet. Der Stößel 27 verfährt wie vorstehend beschrieben automatisch, sobald das Behältnis 4 auf der Parkfläche 23 positioniert ist. Dabei verschiebt der Stößel 27 das Behältnis 4 in Richtung seiner Mittelachse 43 und somit in einer Richtung rechtwinklig zur Förderrichtung 11 in eine definierte Position B. Das Behältnis 4 schlägt dabei an einen dem Stößel 27 gegenüberliegend angeordneten Pufferelement 28 an und verharrt in der Position B.

In beiden Fällen, in denen das Behältnis 4 in der Position A oder in der Position B justiert ist, wird das Behältnis 4, nachdem der Stößel 27 wieder in seiner Ausgangsposition angekommen ist, durch Absenken der Barriere 25 wieder freigegeben und rollt durch die Schwerkraft bedingt auf eine Rampe 31 der Orientierungseinrichtung 3 und wird somit in Förderrichtung 11 weiter transportiert. Das Behältnis 4 rollt schwerkraftbedingt auf der Förderfläche 32 die Rampe 31 hinunter und schlägt in beiden Fällen gemäß Fig. 2 und 3c mit der Mantelfläche im Bereich der offenen Seite 41 an eine mechanische Führung 33, 36 an. Gemäß Fig. 2 schlägt das Behältnis 4 auf der Seite des Stößels 27 an die mechanische Führung 36 an. In dem Beispiel gemäß Fig. 3a bis 3c schlägt das Behältnis 4 auf der dem Stößel 27 gegenüberliegenden Seite an die mechanische Führung 33 mit der offenen Seite 41 an.

Durch den Anschlag an die mechanischen Führungen 33, 36 wird das Behältnis 4 außermittig gebremst und um eine rechtwinklig zur Förderfläche 32 verlaufende Achse abgelenkt und dadurch mit der geschlossenen Seite 42 in Förderrichtung 11 voran orientiert. In Fig. 2 dreht sich das Behältnis 4 rechts herum und in Fig. 3b links herum. Die mechanischen Führungen 33, 36 weisen gemäß Fig. 1 eine konkave Rinne 37 auf, durch die das Behältnis 4 nicht abrupt gestoppt, sondern verzögert abgebremst wird. Dadurch, dass die Rinne 37 eine Art Schanze bildet, die in einer Ebene der Förderfläche 32 an die Förderfläche 32 anschließt, rollt das Behältnis 4 mit einer Seite die Rinne 37 hoch und wird dadurch abgebremst. Durch die Rinne 37 wird somit die Rotationsbewegung des Behältnisses 4 gebremst bzw. gestoppt, bevor das Behältnis 4 eine Rutsche 35 hinabfällt.

Somit fällt das Behältnis 4 mit der geschlossenen Seite 42 voran auf die Rutsche 35 der Orientierungseinrichtung 3 und gleitet auf einer Rutschfläche 34 die Rutsche 35 hinunter, wobei es dabei vollständig definiert orientiert wird. Die Rutschfläche 34 ist konkav ausgebildet, damit das Behältnis 4 die Orientierung mit der geschlossenen Seite 42 nach unten beibehält und sich nicht durch den Impuls der mechanischen Führung 33, 36 wieder umdreht.

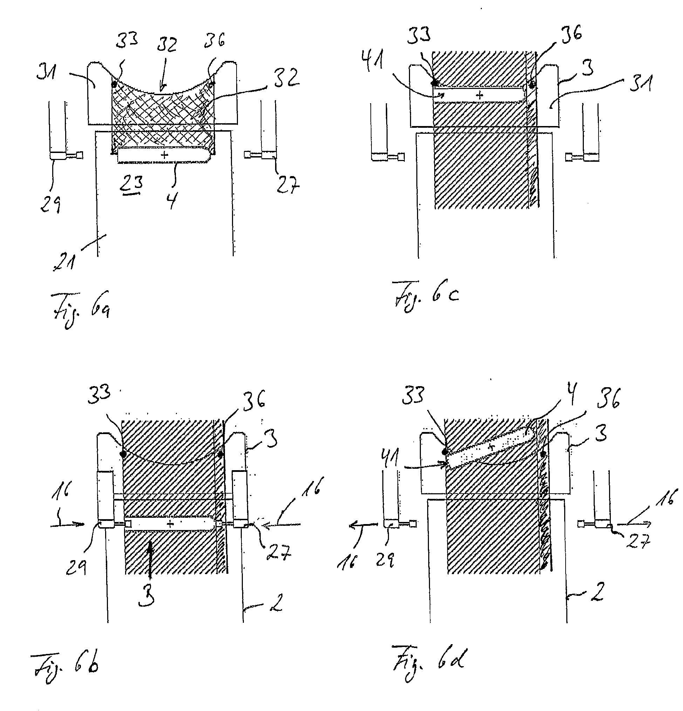

In Fig. 6a bis 6d sind vier Verfahrensschritte eines alternativen Verfahrens mit zwei Stößeln 27, 29 dargestellt. Bei diesem Ausführungsbeispiel fehlt die Gleitschiene 20 in der Zuführeinrichtung 1.

In einem ersten Schritt wird das Behältnis 4 durch eine nicht dargestellte Zuführeinrichtung auf der Parkfläche 23 positioniert, aber dabei nicht wie in Bezug auf das vorstehend beschriebene Ausführungsbeispiel in einer definierten Position A justiert. In der Parkposition werden gemäß Fig. 6b beide Stößel 27, 29 aktiviert und bewegen sich koaxial auf der Mittelachse 43 des Behältnisses 4 aufeinander zu. Da das Behältnis 4 mit der offenen Seite 41 dem zweiten Stößel 29 zugewandt ist, wird das Behältnis 4 durch den Stößel 27 verschoben und in die Position B gemäß Fig. 3b justiert.

Würde das Behältnis 4 andersherum liegen, würde es durch den Stößel 29 in die Position A gemäß Fig. 2 verschoben werden, welche nicht dargestellt ist.

Gemäß Fig. 6c schlägt das Behältnis 4 entsprechend dem vorstehend beschriebenen Ausführungsbeispiel wie in Fig. 3c dargestellt mit der offenen Seite 41 an der mechanischen Führung 33 an und wird wie in Fig. 6d dargestellt auf der offenen Seite 41 außermittig abgebremst, sodass es mit der geschlossenen Seite 42 in Förderrichtung 11 voran auf die Rutsche 35 fällt.

An die Rutsche 35 schließt ein nicht dargestellter Vorratsbehälter an, in den das Behältnis 4 mit der geschlossenen Seite 42 voran hineinfällt. Der Vorratsbehälter wird mittelbar ebenso wie die Stößel 27, 29, das Transportelement 12 und die Barriere 25 über eine nicht dargestellte zentrale Regel- und Steuereinheit in Abhängigkeit von der Position des jeweiligen Behältnisses 4 bewegt.

### Bezugszeichen

- 1: Zuführeinrichtung
- 11: Förderrichtung
- 12: Transportelement
- 13: Seitenführung
- 14: Seitenführung
- 15: Pfeil
- 16: Pfeil
- 2: Justiereinrichtung
- 20: Gleitschiene
- 21: Aufnahme
- 22: Durchmesser
- 23: Parkfläche
- 24: Bremsvorrichtung
- 25: Barriere
- 27: Stößel
- 28: Pufferelement
- 29: zweiter Stößel
- 3: Orientierungseinrichtung
- 31: Rampe
- 32: Förderfläche
- 33: mechanische Führung
- 34: Rutschfläche
- 35: Rutsche
- 36: mechanische Führung
- 37: Rinne
- 38: Ausnehmung
- 4: Behältnis
- 41: offene Seite
- 42: geschlossene Seite
- 43: Mittelachse
- 44: Innendurchmesser
- 45: Länge
- A: Position
- B: Position
- BF: Breite Förderfläche
- BZ: Förderbreite Zuführeinrichtung

## Patentansprüche

1. Vorrichtung zum Orientieren eines Behältnisses (4) mit einer offenen Seite (41) und einer in Bezug auf eine Mittelachse (43) des Behältnisses (4) gegenüberliegenden geschlossenen Seite (42), insbesondere eines Reagenzglases, aufweisend eine Zuführeinrichtung (1) mit einer Förderrichtung (11) für das Behältnis (4) und einer in Förderrichtung (11) hinter der Zuführeinrichtung (1) angeordneten Orientierungseinrichtung (3) für das Behältnis (4), aus der das Behältnis (4) mit einer vorbestimmten Seite (41, 42) im Wesentlichen mit der Mittelachse (43) parallel zur Förderrichtung (11) austritt, wobei vor der Orientierungseinrichtung (3) eine Justiereinrichtung (2) für das Justieren des Behältnisses (4) in einer Richtung rechtwinklig zur Förderrichtung (11) mit mindestens einem im Wesentlichen rechtwinklig zur Förderrichtung (11) beweglichen Stößel (27), dessen Durchmesser (22) kleiner als ein Innendurchmesser (44) des Behältnisses (4) ist, vorgesehen ist, **dadurch gekennzeichnet, dass** die Justiereinrichtung (2) in Förderrichtung (11) vor dem Stößel (27) eine in Förderrichtung (11) orientierte Gleitschiene (20) aufweist, an der das Behältnis (4) während der Förderung durch die Zuführeinrichtung (1) entlanggleitet, wobei die Zuführeinrichtung (1) eine zumindest einer Länge (45) des Behältnisses (4) entsprechende Förderbreite (BZ) aufweist und wobei durch die Gleitschiene (20) die Förderbreite (BZ) der Zuführeinrichtung (1) für das Behältnis (4) in Förderrichtung (11) kontinuierlich reduziert wird.

2. Vorrichtung nach Anspruch 1, **dadurch gekennzeichnet, dass** die Justiereinrichtung (2) eine Aufnahme (21) mit einer Parkfläche (23) für das Behältnis (4) aufweist, auf der das Behältnis (4) mit seiner Mittelachse (43) im Wesentlichen rechtwinklig zu der Förderrichtung (11) positionierbar ist.

3. Vorrichtung nach Anspruch 2, **dadurch gekennzeichnet, dass** der Stößel (27, 29) derart angeordnet ist, dass der Stößel (27) entlang der Mittelachse (43) des auf der Parkfläche (23) positionierbaren Behältnisses (4) bewegbar ist.

4. Vorrichtung nach Anspruch 2 oder 3, **dadurch gekennzeichnet, dass** die Justiereinrichtung (2) in Förderrichtung (11) nach der Parkfläche (23) eine Bremsvorrichtung (24) für das Behältnis (4) aufweist und das Behältnis (4) durch die Bremsvorrichtung (24) auf der Parkfläche (23) gestoppt werden kann.

5. Vorrichtung nach Anspruch 4, **dadurch gekennzeichnet, dass** als Bremsvorrichtung (24) eine in Förderrichtung (11) nach der Parkfläche (23) angeordnete Barriere (25) vorgesehen ist.

6. Vorrichtung nach Anspruch 5, **dadurch gekennzeichnet, dass** die Barriere (25) in einer Richtung rechtwinklig zur Parkfläche (23) zwischen einer das Behältnis (4) bremsenden und einer das Behältnis (4) in Förderrichtung (11) freigebenden Position gehoben und gesenkt werden kann.

7. Vorrichtung nach Anspruch 6, **dadurch gekennzeichnet, dass** die Rampe (31) eine Ausnehmung (38) aufweist, in der die Barriere (25) im Wesentlichen rechtwinklig zur Parkfläche (23) geführt ist.

8. Vorrichtung nach einem der Ansprüche 1 bis 7, **dadurch gekennzeichnet, dass** die Orientierungseinrichtung (3) eine das Behältnis (4) in Förderrichtung (11) weiter transportierende Rampe (31) mit einer Förderfläche (32) für das Behältnis (4) aufweist und die Förderfläche (32) eine Breite (BF) aufweist, die um einen Faktor 1,1 bis 1,8, insbesondere 1,2 größer ist als die Länge (45) des Behältnisses (4) zwischen der offenen Seite (41) und der geschlossenen Seite (42), wobei die Orientierungseinrichtung (3) mindestens eine im Bereich der Förderfläche (32) angeordnete mechanische Führung (33) aufweist, an der das Behältnis (4) in Richtung der Mittelachse (43) mit Bezug zu der Länge (45) außermittig abgebremst werden kann.

9. Vorrichtung nach Anspruch 8, **dadurch gekennzeichnet, dass** die Orientierungseinrichtung (3) zwei im Bereich der Förderfläche (32) und in Bezug auf die Rampe (31) gegenüberliegend angeordnete mechanische Führungen (33, 36) aufweist, an denen das Behältnis (4) in Richtung der Mittelachse (43) mit Bezug zu der Länge (45) außermittig abgebremst werden kann.

10. Vorrichtung nach einem der Ansprüche 8 bis 9, **dadurch gekennzeichnet, dass** an die Orientierungseinrichtung (3) in Förderrichtung (11) nach der Rampe (31) eine Rutsche (35) mit einer zumindest teilweise konkaven Rutschfläche (34) für das Behältnis (4) anschließt.

11. Vorrichtung nach einem der Ansprüche 2 bis 10, **dadurch gekennzeichnet, dass** mit Bezug zu der Aufnahme (21) auf der gegenüberliegenden Seite des Stößels (27) ein Pufferelement (28) vorgesehen ist, mittels dessen das Behältnis (4) gebremst werden kann.
